# FASCICULE DE BREVET EUROPEEN

(11) **EP 3 116 100 B1**
(45) Date de publication et mention de la délivrance du brevet: **29.07.2026**
(21) Numéro de dépôt: 16177931.9
(22) Date de dépôt: 05.07.2016
(51) Int. Cl.: H02K 1/02, H02K 1/30, H02K 1/278

(54) **ROTOR SURMOULÉ D'UNE MACHINE ÉLECTRIQUE TOURNANTE**
EINGEGOSSENER ROTOR EINER ROTIERENDEN ELEKTRISCHEN MASCHINE
OVER-MOULDED ROTOR OF A ROTATING ELECTRIC MACHINE

(30) Priorité: 10.07.2015 FR 1556581
(43) Date de publication de la demande: 11.01.2017
(73) Titulaire: BHG, 68100 Mulhouse (FR); Arelec Solution, 64140 Lons (FR)
(72) Inventeur: PASQUIER, Patrick, 74300 CLUSES (FR); VUARCHEX, Alain, 74970 MARIGNIER (FR); DEJEAN, David, 64230 DENGUIN (FR); MENDIBOURE, Geoffrey, 64230 POUEY DE LESCAR (FR); DONJON, Thomas, 64000 PAU (FR); DE BORTOLI, Marc, 64230 ARTIGUELOUVE (FR)
(74) Mandataire: Littolff, Denis

(56) Documents cités:
- EP-A1- 2 390 986
- EP-A1- 2 667 482
- WO-A1-96/25785
- FR-A1- 3 008 224
- US-A1- 2014 239 749
- US-B1- 6 765 319

## Description

La présente invention concerne un rotor de machine électrique tournante synchrone à aimants permanents. Ces machines synchrones se composent très généralement d'un stator à au moins un bobinage alimenté de manière à produire un champ magnétique tournant à la fréquence du signal d'alimentation et d'un rotor dont les aimants permanents distribués en périphérie produisent également un champ magnétique.

Les aimants permanents se présentent notamment sous la forme de barres placées le plus régulièrement possible sur la périphérie du rotor, et qui sont généralement fixées sur un support magnétique via des moyens ou techniques qui ne permettent pas toujours un positionnement final précis des composants les uns par rapport aux autres : les aimants peuvent par exemple être collés sur le support, ou placés dans un logement qui s'apparente à une queue d'aronde, le support étant ensuite riveté. Les problèmes liés à ce type de montage sont multiples, résultant en premier lieu du manque de précision de l'assemblage qui ne garantit pas une répartition périphérique homogène des aimants ni, individuellement, un positionnement correct. Les déficiences sont d'abord dues aux tolérances de fabrication des barres aimantées, voire des éléments du support, induisant une dispersion dimensionnelle difficilement gérable. Ensuite, l'utilisation de colle, et plus spécifiquement l'absence d'uniformité dans son application, peut également générer des imprécisions.

Or, les imperfections de positionnement des aimants, que ce soit dans une direction radiale, axiale ou tangentielle, dégradent la qualité de la rotation et entrainent une augmentation du bruit au cours de celle-ci. Un déséquilibre massique naît en effet des imprécisions de placement des aimants, et éventuellement des défauts liés à leur tolérance de fabrication, aboutissant de fait à déplacer l'axe d'inertie du solide tournant et à générer un moment d'inertie indésirable. Dans certaines applications, le diamètre extérieur de l'ensemble support/aimants doit être très précis (de l'ordre de +/- 0,1 mm), ce qui est très difficile à obtenir au regard des tolérances de fabrication et d'assemblage des pièces qui entrent dans la composition de ces ensembles.

C'est d'autant plus vrai que pour optimiser le fonctionnement magnétique de l'ensemble, on cherche à couvrir d'aimants la plus grande partie de la surface périphérique du rotor, et que cela conduit à employer des formes un peu plus complexes, plus susceptibles de s'écarter au cours de la fabrication des dimensions théoriques prévues, comme par exemple des tuiles. Dans un tel cas de formes d'aimants moins basiques, les problèmes de positionnement adéquat et de précision du dimensionnement se posent d'ailleurs également au niveau du support rotorique qui doit les loger, avec sensiblement les mêmes inconvénients et limitations que ceux mentionnés auparavant.

Pour toutes ces raisons, les techniques d'assemblage traditionnelles s'avèrent de fait assez peu économiques, parce qu'elles ne sont guère faciles à mettre en oeuvre et prennent par conséquent du temps.

L'un des buts de la présente invention est de remédier à ces insuffisances et limitations, en proposant un rotor dont la technologie permet de largement s'affranchir des inconvénients précités. Le rotor obtenu est particulièrement robuste, permet un fonctionnement optimisé et à faible niveau de bruit, moyennant une fabrication simplifiée et à moindre coût relativement aux performances obtenues.

A ces effets, et conformément à l'invention, il est proposé un rotor de machine électrique tournante à aimants permanents périphériques constitués de barres aimantées positionnées parallèlement à l'axe du rotor, constituées en une seule pièce ou de plusieurs tronçons aboutés axialement, les aimants permanents étant solidarisés à un arbre et positionnés relativement audit arbre via une pièce de liaison obtenue par surmoulage par au moins une matière thermoplastique chargée en matériau aimanté. Le rotor est tel que la pièce de liaison constitue une enveloppe d'allure cylindrique pour le rotor, la face extérieure des aimants permanents affleurant à la surface de ladite enveloppe.

L'emploi du surmoulage pour associer les différents composants du rotor ne s'impose pas a priori dans un tel contexte, car les plastiques usuellement utilisés pour le surmoulage nécessitent, pour la maîtrise des conditions de moulage, des épaisseurs de l'ordre de 0,8 mm pour la plupart des matériaux communément utilisés (polyamide, polyoxyméthylène, polyester..), qui peuvent éventuellement descendre à 0,3 mm pour des matériaux haut de gamme comme les polymères à cristaux liquides. Or, ces épaisseurs ne sont guère compatibles avec un fonctionnement correct de machines électriques tournantes, dans la mesure où elles créent des entrefers préjudiciables à leur bon comportement magnétique. L'apport de l'invention consiste donc à utiliser des matières thermoplastiques magnétiquement chargées pour contribuer positivement à la performance magnétique de la machine en remplissant notamment les interstices entre aimants avec des matériaux conducteurs de flux magnétique au lieu de générer des entrefers parasites.

L'utilisation du surmoulage présente bien d'autres avantages, notamment sur le plan mécanique, parce qu'il permet de manière générale une grande maîtrise des positionnements et formes. Cette technique accroît en particulier notablement la précision de la forme finale de rotor obtenue, assure une réduction de la masse globale, une meilleure concentricité (résultant notamment de la meilleure maîtrise de la forme extérieure), laquelle contribue à son tour à minimiser d'éventuels moments d'inerties parasites et, in fine, à réduire le niveau de bruit. Le diamètre extérieur du rotor est par ailleurs bien mieux maîtrisé, conduisant à une constance de l'entrefer. Le positionnement des aimants dans le rotor est également plus précis, grâce aux agencements adéquats dans le moule, contribuant aussi au meilleur comportement mécanique, en sus de l'amélioration du fonctionnement magnétique proprement dit. L'utilisation du surmoulage dans des rotors est déjà connue, par exemple divulgué dans les documents EP 2 667 482 A1 et WO96/25785 A1. Dans le premier cas, cependant, il n'y a pas d'aimants permanents sous forme de barreaux, mais seulement une couche de matière aimantée surmoulée. Dans le second cas, le surmoulage enrobe la face polaire des aimants en regard d'un induit, et règle par conséquent l'entrefer, au contraire de la configuration de la présente invention.

Toutes les possibilités de matériaux magnétiques et/ou ferromagnétiques associés à des polymères peuvent être employées, dans le cadre de l'invention, pour réaliser la pièce de liaison surmoulée. Ils sont en général utilisés sous forme de poudres. Selon une première possibilité, la matière thermoplastique de la pièce de liaison peut être chargée en ferrite. Il s'agit donc d'un plastoferrite qui lie rigidement les aimants périphériques au noyau métallique du rotor. C'est une solution économiquement intéressante, la réalisation de plastoferrites faisant appel à des composants usuels et raisonnablement peu onéreux. Une alternative possible consiste en une matière thermoplastique chargée en un matériau magnétique contenant des terres rares. Celles-ci peuvent par exemple être du type comportant du néodyme. Le néodyme est alors utilisé en alliage notamment avec le fer sous une forme générique NdFeB (incluant du Bore), créant des aimants permanents très puissants dits aimants NdFeB. La matière thermoplastique aimantée est alors parfois appelée plastonéodyme. Il est alternativement également possible d'employer un matériau magnétique contenant un mélange de ferrite et/ou de terres rares, dont par exemple des terres rares du type comportant du néodyme.

En pratique, comme mentionné auparavant, la pièce de liaison constitue une enveloppe d'allure cylindrique pour le rotor, la face extérieure des aimants permanents affleurant à la surface de ladite enveloppe. La ferrite des aimants permanents est donc entourée sur plusieurs faces de plastoferrite ou de plastonéodyme. Grâce au surmoulage, la maîtrise du diamètre extérieur du rotor est excellente. La matière thermoplastique aimantée remplit l'espace entre le noyau magnétique ou l'axe central du rotor et les aimants, quelles que soient leurs formes respectives, et donc notamment indépendamment de toute dispersion dimensionnelle résultant de la production des composants. En termes de fonctionnement magnétique, les flux peuvent se refermer sur un éventuel noyau magnétique interne au rotor via la plastoferrite ou le plastonéodyme de la pièce de liaison.

Classiquement, les aimants permanents sont constitués de barres aimantées positionnées parallèlement à l'axe du rotor, constituées en une seule pièce ou de plusieurs tronçons aboutés axialement. Ces barres aimantées peuvent par exemple présenter une section transversale en forme de tuile, en vue de couvrir la plus grande surface périphérique possible, la plastoferrite ou le plastonéodyme remplissant alors des rainures axiales localisées entre aimants adjacents.

Mais, selon l'un des avantages intéressants de l'invention, les barres aimantées peuvent aussi être prévues de formes très simples, et présenter par exemple une section transversale d'allure rectangulaire, ou éventuellement trapézoïdale. Ces barres sont alors de préférence entourées sur cinq faces de matière thermoplastique aimantée, seule la face en regard du stator étant libre et affleurant la surface périphérique du rotor. Les aimants permanents, plus simples et plus compacts, sont moins fragiles, conduisant à un sous-ensemble rotor bien plus robuste. Ces exemples de formes d'aimants permanents ne sont bien entendu pas limitatifs de l'invention, mais en sont illustratifs.

Les barres aimantées constituant les aimants peuvent, dans certains contextes (pilotage par capteurs), dépasser axialement de la pièce de liaison surmoulée, à au moins une extrémité du rotor. Dans une configuration selon laquelle les aimants sont noyés sur cinq faces dans la pièce thermoplastique de liaison, s'il est nécessaire de disposer d'une magnétisation les polarisations de ces aimants jusqu'en bout de rotor, la pièce thermoplastique de liaison peut présenter une partie d'extrémité axiale, recouvrant les extrémités axiales des barres aimantées, qui est elle-même magnétisée axialement selon des secteurs angulaires de polarisation alternée qui correspondent aux sections des aimants permanents qu'ils prolongent.

Parmi les avantages prépondérants de l'invention, l'existence de la pièce de liaison surmoulée magnétisée peut permettre de simplifier la structure du rotor en ce que l'arbre peut prendre la forme d'un axe central simple, muni de rainures transversales périphériques pour réaliser un ancrage de l'un sur l'autre. Cette solution est économiquement très favorable, dans la mesure où le coût de production d'un simple axe est sans commune mesure avec celui d'un support central à noyau magnétique, feuilleté ou non.

Mais l'invention s'applique cependant également à une configuration dans laquelle l'arbre comporte un axe auquel est solidarisé un noyau magnétique d'allure cylindrique, la matière thermoplastique remplissant alors simplement moins d'espace entre les aimants et le noyau.

La configuration du rotor selon la présente invention est avantageuse en ce qu'elle permet de s'affranchir des limitations, par exemple des entrefers parasites, résultant des modes de fabrication antérieurs, particulièrement le collage. L'invention permet par ailleurs une meilleure liaison des aimants permanents périphériques avec l'arbre intérieur, quelle que soit sa configuration, et l'utilisation d'aimants de formes simples, faciles et économiques à fabriquer.

D'autres avantages et caractéristiques ressortiront mieux de la description qui va suivre de plusieurs variantes d'exécution, données à titre d'exemples non limitatifs du rotor d'une machine électrique tournante conforme à l'invention, en référence aux figures annexées :
- la figure 1 représente en vue perspective une première configuration de rotor selon l'invention, avec des aimants permanents en forme de tuiles ;
- la figure 2 montre la variante de la figure 1 en vue perspective partiellement éclatée ;
- la figure 3 illustre schématiquement son fonctionnement magnétique ;
- la figure 4 montre une seconde variante de rotor selon la présente invention, avec des aimants en forme de barres prismatiques ;
- la figure 5 représente cette variante en coupe partielle ; et
- la figure 6 montre la variante des figures 4 et 5 en vue perspective partiellement éclatée.

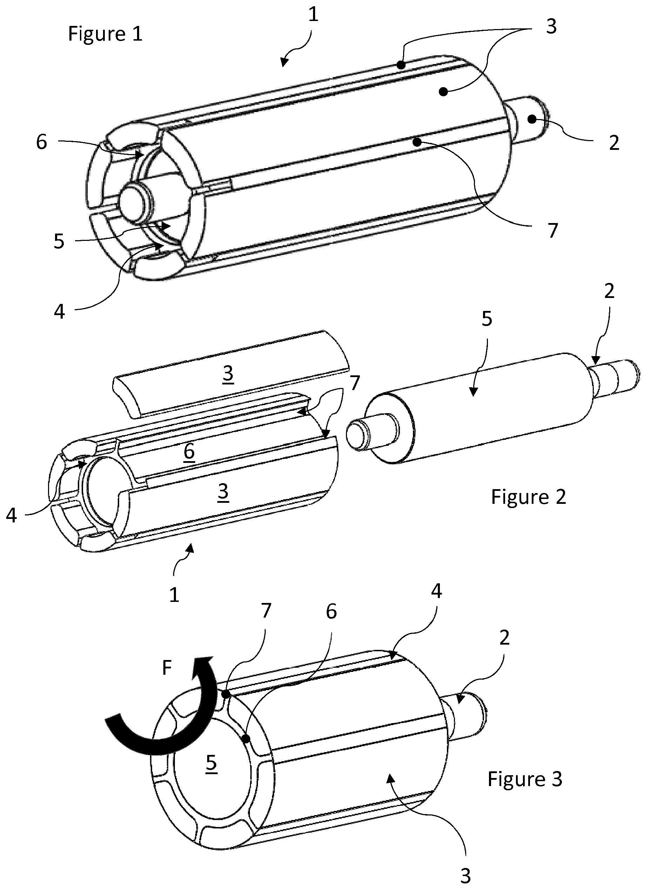

Dans la suite, à des fins de simplification et de clarté pour une meilleure compréhension, les mêmes références numériques désignent les mêmes éléments. En référence à la figure 1 , le rotor (1) comporte classiquement un axe central (2) et des aimants périphériques (3). Une pièce intermédiaire (4) obtenue par surmoulage remplit les volumes compris entre la couronne des aimants périphériques (3) et un noyau magnétique (5) central d'une part, et périphériquement entre les aimants (3) eux-mêmes d'autre part. Les aimants (3) sont en l'espèce en forme de tuiles ou de portions de couronne. Cette pièce de liaison (4) surmoulée, chargée comme mentionné précédemment en matériau magnétique de type ferrite ou NdFeB, ou en tout autre matériau magnétique ou ferromagnétique ou en mélange de ces matériaux, comporte un moyeu central (6) dans la partie entre les aimants (3) et le noyau (5), et des ailes (7) s'orientant radialement et s'évasant à leur extrémité pour investir les rainures axiales qui existent entre aimants (3) adjacents (voir en particulier en figures 2 et 3 ). Le fonctionnement magnétique correct résulte du fait que le flux magnétique F, qui apparaît en figure 3 , peut se refermer sur le noyau magnétique (5) via la pièce de liaison (4).

Dans cette configuration, l'arbre central est composé d'un axe (2) et d'un noyau (5), et le moyeu (6) de la pièce de liaison (4) surmoulée est par conséquent de relativement faible épaisseur, de même que les ailes radiales (7). Les extrémités axiales du moyeu (6) se referment partiellement autour du noyau (5), formant une paroi annulaire transversale qui bloque la pièce de liaison (4) par rapport à l'ensemble axe (2)/noyau magnétique (5).

Le surmoulage permet que la matière thermoplastique à l'état liquide investisse, sous l'effet de la pression d'injection, tous les espaces libres du moule. La surface périphérique externe du rotor est parfaitement cylindrique, les barres aimantées (3) en tuiles étant positionnées et distribuées de manière équilibrée sur la périphérie du fait d'un placement préliminaire adéquat dans le moule. La dispersion dimensionnelle liée à la fabrication des aimants (3) n'a plus d'incidence, pas plus que le mode de fixation des aimants au rotor (1), comme cela pouvait être le cas par exemple dans les procédés de collage de l'art antérieur (surépaisseurs de colle). Ces limitations sont purement et simplement gommées, conduisant à un rotor optimisé sur le plan du fonctionnement mécanique et magnétique.

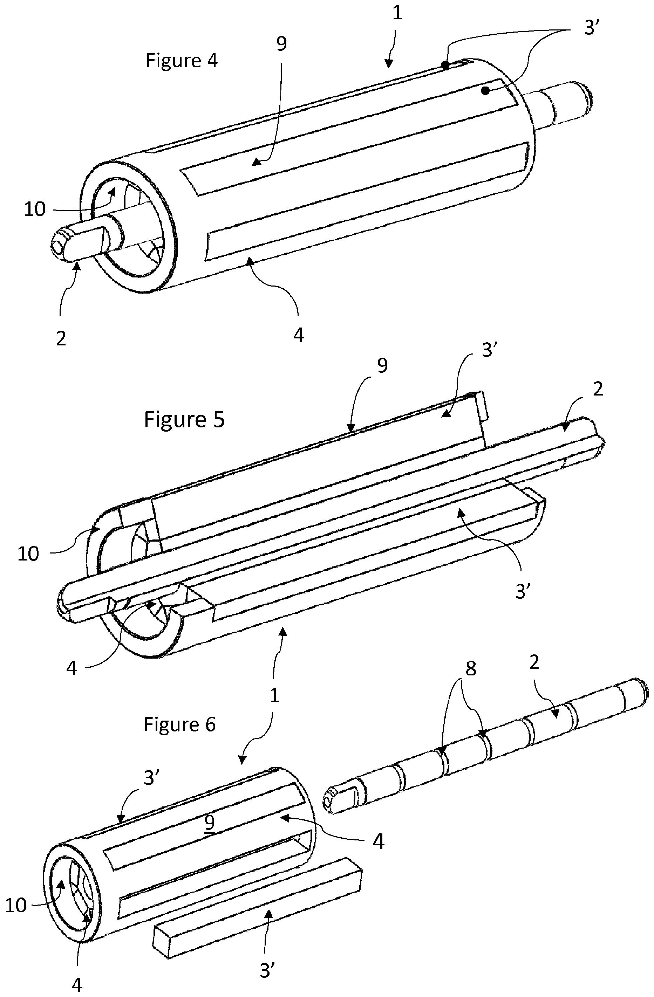

En référence aux figures 4 à 6 , les possibilités issues de l'existence de la pièce de liaison (4) obtenue par surmoulage sont optimalement exploitées, dans la mesure où le noyau magnétique (5) est supprimé et les barres aimantées (3') simplifiées. Le bouclage des flux magnétiques internes au rotor (1) est dans ce cas assuré par ladite pièce (4) chargée de ferrite ou de NdFeB. L'élément mécanique central du rotor (1) est à présent constitué d'un simple axe (2), facile et peu cher à fabriquer, des rainures par exemple périphériques (8) mais qui peuvent prendre d'autres formes (moletage, crantage) étant pratiquées dans ledit axe (2) à des fins d'ancrage de la pièce intermédiaire (4) surmoulée.

Les aimants permanents deviennent de simples barres (3') parallélépipédiques noyées dans ladite pièce (4), dont seule la surface extérieure (9) affleure la surface périphérique cylindrique de l'enveloppe créée par la pièce surmoulée (4). Ces barres (3') sont également très économiques à fabriquer. Un des intérêts de cette seconde configuration est aussi d'offrir une bonne protection aux barres aimantées (3'), qui peuvent présenter une certaine fragilité, et qui sont à présent protégées sur cinq de leurs six faces, noyées dans l'enveloppe thermoplastique.

Pour des raisons de pilotage du moteur à l'aide de capteurs externes (non représentés), il peut être opportun que l'enveloppe constituée de la pièce de liaison (4) s'étende axialement à l'une des extrémités du rotor (1), typiquement en direction du ou des capteur(s), afin d'assurer une détection correcte par ce ou ces dernier(s). Dans ce cas, la portion d'extrémité (10) qui dépasse axialement est magnétisée axialement en conformité avec la répartition angulaire des aimants (3') qu'elle prolonge. Ce prolongement axial des aimants (3) apparaît également dans la version illustrée dans les figures 1 à 3 , prolongement qui relève alors directement des barres aimantées (3). Le porte-à-faux qui en résulte peut constituer un facteur de fragilisation du rotor (1), qui n'existe plus dans la version des figures 4 à 6 . Il y a donc une polarisation alternée au niveau de l'extrémité axiale, nécessaire à la détection, qui implique en outre que l'écartement angulaire des secteurs aimantés d'extrémité corresponde à celui des aimants permanents.

L'invention ne se limite bien entendu pas aux exemples décrits et expliqués en référence aux figures, qui n'en sont que des illustrations particulières. L'invention englobe au contraire les variantes et versions qui entrent dans la portée des revendications.

## Revendications

1. Rotor de machine électrique tournante à aimants permanents (3, 3') périphériques constitués de barres aimantées positionnées parallèlement à l'axe du rotor, constituées en une seule pièce ou de plusieurs tronçons aboutés axialement, les aimants permanents (3, 3') étant solidarisés à un arbre (2, 5) et positionnés relativement audit arbre (2, 5) via une pièce de liaison (4) obtenue par surmoulage par au moins une matière thermoplastique chargée en matériau aimanté, **caractérisé en ce que** la pièce de liaison (4) constitue une enveloppe d'allure cylindrique pour le rotor (2, 5), la face extérieure des aimants permanents (3, 3') affleurant à la surface de ladite enveloppe.

2. Rotor (1) de machine électrique tournante selon la revendication précédente, **caractérisé en ce que** le matériau aimanté est constitué de tout composé magnétique et/ou ferromagnétique.

3. Rotor (1) de machine électrique tournante selon l'une des revendications précédentes, **caractérisé en ce que** la matière thermoplastique de la pièce de liaison (4) est chargée en ferrite.

4. Rotor (1) de machine électrique tournante selon l'une des revendications 1 et 2, **caractérisé en ce que** la matière thermoplastique de la pièce de liaison (4) est chargée en un matériau magnétique contenant des terres rares.

5. Rotor (1) de machine électrique tournante selon l'une des revendications 3 ou 4, **caractérisé en ce que** la matière thermoplastique de la pièce de liaison (4) est chargée en un matériau magnétique contenant un mélange de ferrite et de terres rares.

6. Rotor (1) de machine électrique tournante selon l'une des revendications 4 et 5, **caractérisé en ce que** le matériau magnétique contient des terres rares du type comportant du néodyme.

7. Rotor (1) de machine électrique tournante selon l'une des revendications précédentes, **caractérisé en ce que** les barres aimantées (3) présentent une section transversale en forme de tuile.

8. Rotor (1) de machine électrique tournante selon l'une des revendications 1 à 6, **caractérisé en ce que** les barres aimantées (3') présentent une section transversale d'allure rectangulaire ou trapézoïdale.

9. Rotor (1) de machine électrique tournante selon l'une des revendications 7 à 8 **caractérisé en ce que** les barres aimantées (3) dépassent axialement de la pièce de liaison (4) à l'arbre central (2, 5) au moins à une extrémité du rotor (1).

10. Rotor (1) de machine électrique tournante selon l'une des revendications 7 à 8, **caractérisé en ce que** la pièce thermoplastique de liaison (4) présente une partie (10) d'extrémité axiale recouvrant les extrémités axiales des barres aimantées (3') et magnétisée axialement selon des secteurs angulaires de polarisation alternée qui correspondent aux sections des aimants permanents qu'ils prolongent.

11. Rotor de machine électrique tournante selon l'une des revendications précédentes, **caractérisé en ce que** l'arbre est un axe (2) central simple, muni de rainures transversales (8) périphériques.

12. Rotor de machine électrique tournante selon l'une des revendications 1 à 10, **caractérisé en ce que** l'arbre comporte un axe (2) auquel est solidarisé un noyau magnétique (5) d'allure cylindrique.

## Patentansprüche

1. Rotor einer rotierenden elektrischen Maschine mit umfänglichen Permanentmagneten (3, 3'), welche aus magnetisierten Barren gebildet sind, welche parallel zu der Achse des Rotors positioniert sind, gebildet aus einem einzelnen Stück oder mehreren axial anliegenden Teilstücken, wobei die Permanentmagnete (3, 3') an einer Welle (2, 5) befestigt und bezüglich der Welle (2, 5) mittels eines Verbindungsstücks (4) positioniert sind, welches durch Umspritzen mit wenigstens einer thermoplastischen Substanz erhalten ist, welche mit magnetisiertem Material beladen ist, **dadurch gekennzeichnet, dass** das Verbindungsstück (4) eine Hülle mit zylindrischer Gestalt für den Rotor (2, 5) bildet, wobei die äußere Fläche der Permanentmagnete (3, 3') bündig mit der Fläche der Hülle ist.

2. Rotor (1) einer rotierenden elektrischen Maschine nach dem vorhergehenden Anspruch, **dadurch gekennzeichnet, dass** das magnetisierte Material aus einer beliebigen magnetischen und/oder ferromagnetischen Verbindung gebildet ist.

3. Rotor (1) einer rotierenden elektrischen Maschine nach einem der vorhergehenden Ansprüche, **dadurch gekennzeichnet, dass** die thermoplastische Substanz des Verbindungsstücks (4) mit Ferrit beladen ist.

4. Rotor (1) einer rotierenden elektrischen Maschine nach einem der Ansprüche 1 und 2, **dadurch gekennzeichnet, dass** die thermoplastische Substanz des Verbindungsstücks (4) mit einem magnetischen Material beladen ist, welches seltene Erden enthält.

5. Rotor (1) einer rotierenden elektrischen Maschine nach einem der Ansprüche 3 oder 4, **dadurch gekennzeichnet, dass** die thermoplastische Substanz des Verbindungsstücks (4) mit einem magnetischen Material beladen ist, welches eine Mischung aus Ferrit und seltenen Erden enthält.

6. Rotor (1) einer rotierenden elektrischen Maschine nach einem der Ansprüche 4 und 5, **dadurch gekennzeichnet, dass** das magnetische Material seltene Erden von dem Typ enthält, welcher Neodym umfasst.

7. Rotor (1) einer rotierenden elektrischen Maschine nach einem der vorhergehenden Ansprüche, **dadurch gekennzeichnet, dass** die magnetisierten Barren (3) einen Querschnitt in Form eines Ziegels aufweisen.

8. Rotor (1) einer rotierenden elektrischen Maschine nach einem der Ansprüche 1 bis 6, **dadurch gekennzeichnet, dass** die magnetisierten Barren (3') einen Querschnitt von rechteckiger oder trapezförmiger Gestalt aufweisen.

9. Rotor (1) einer rotierenden elektrischen Maschine nach einem der Ansprüche 7 bis 8, **dadurch gekennzeichnet, dass** die magnetisierten Barren (3) axial von dem Verbindungsstück (4) zu der zentralen Welle (2, 5) über wenigstens ein Ende des Rotors (1) hinausragen.

10. Rotor (1) einer rotierenden elektrischen Maschine nach einem der Ansprüche 7 bis 8, **dadurch gekennzeichnet, dass** das thermoplastische Verbindungsstück (4) einen axialen Endteil (10) aufweist, welcher die axialen Enden der magnetisierten Barren (3') bedeckt und axial gemäß Winkelsektoren mit abwechselnder Polarität magnetisiert ist, welche den Abschnitten der Permanentmagnete entsprechen, welche sie verlängern.

11. Rotor (1) einer rotierenden elektrischen Maschine nach einem der vorhergehenden Ansprüche, **dadurch gekennzeichnet, dass** die Welle eine einfache zentrale Achse (2) ist, welche mit umfänglichen transversalen Nuten (8) versehen ist.

12. Rotor (1) einer rotierenden elektrischen Maschine nach einem der Ansprüche 1 bis 10, **dadurch gekennzeichnet, dass** die Welle eine Achse (2) umfasst, an welcher ein Magnetkern (5) von zylindrischer Gestalt befestigt ist.

## Claims

1. Rotor for a rotating electric machine with peripheral permanent magnets (3, 3') consisting of magnetised bars positioned parallel to the axis of the rotor, made in one-piece or of a plurality of axially joined sections, the permanent magnets (3, 3') being secured to a shaft (2, 5) and positioned relative to said shaft (2, 5) via a connecting part (4) obtained by overmoulding using at least one thermoplastic material filled with magnetised material, **characterised in that** the connecting part (4) forms a cylindrical-looking envelope for the rotor (2, 5), the external face of the permanent magnets (3, 3') being flush with the surface of said envelope.

2. Rotor (1) for a rotating electric machine according to the preceding claim, **characterised in that** the magnetised material consists of any magnetic and/or ferromagnetic compound.

3. Rotor (1) for a rotating electric machine according to one of the preceding claims, **characterised in that** the thermoplastic material of the connecting part (4) is filled with ferrite.

4. Rotor (1) for a rotating electric machine according to one of Claims 1 or 2, **characterised in that** the thermoplastic material of the connecting part (4) is filled with a magnetic material containing rare earths.

5. Rotor (1) for a rotating electric machine according to one of Claims 3 or 4, **characterised in that** the thermoplastic material of the connecting part (4) is filled with a magnetic material containing a mixture of ferrite and rare earths.

6. Rotor (1) for a rotating electric machine according to one of Claims 4 or 5, **characterised in that** the magnetic material contains rare earths of the type comprising neodymium.

7. Rotor (1) for a rotating electric machine according to one of the preceding claims, **characterised in that** the magnetised bars (3) have a tile-shaped cross-section.

8. Rotor (1) for a rotating electric machine according to one of Claims 1 to 6, **characterised in that** the magnetised bars (3') have a rectangular or trapezoidal cross-section.

9. Rotor (1) for a rotating electric machine according to one of Claims 7 or 8, **characterised in that** the magnetised bars (3) project axially from the connecting part (4) to the central shaft (2, 5) at least at one end of the rotor (1).

10. Rotor (1) for a rotating electric machine according to one of Claims 7 or 8, **characterised in that** the thermoplastic connecting part (4) has an axial end part (10) covering the axial ends of the magnetised bars (3') and magnetised axially according to alternating polarisation angular sectors which correspond to the sections of the permanent magnetsthey extend.

11. Rotor for a rotating electric machine according to one of the preceding claims, **characterised in that** the shaft is a simple central shaft member (2), provided with peripheral transverse grooves (8).

12. Rotor for a rotating electric machine according to one of Claims 1 to 10, **characterised in that** the shaft has a shaft member (2) to which a magnetic core (5) of cylindrical appearance is secured.
